Europäisches Patentamt

European Patent Office

Office européen des brevets

(19)

(11) **EP 0 781 581 A2**

(12) **EUROPEAN PATENT APPLICATION**

(43) Date of publication:
**02.07.1997 Bulletin 1997/27**

(21) Application number: **96309156.6**

(22) Date of filing: **16.12.1996**

(51) Int Cl.6: **A63F 9/22**
// G06F161:00

(84) Designated Contracting States:
**DE FR GB NL**

(30) Priority: **25.12.1995 JP 350903/95**

(71) Applicant: **HUDSON SOFT CO., LTD.**
**Sapporo-shi, Hokkaido 062 (JP)**

(72) Inventor: **Masuda, Ryuichi,**
**c/o Hudson Soft Co., Ltd.**
**Sapporo-shi, Hokkaido (JP)**

(74) Representative: **Brunner, Michael John**
**GILL JENNINGS & EVERY**
**Broadgate House**
**7 Eldon Street**
**London EC2M 7LH (GB)**

(54) **Method for calculating time of game in home televison-game apparatus**

(57) A method of calculating a time in a home TV-game apparatus. The method comprises steps of determining a first time in a number of units, determining a second time in a number of units, and comparing the respective units of the first time and the second time to calculate a time difference between the first and second times.

*FIG.3*

## Description

The invention relates to a method for calculating a time of a game in a home television(TV)- game apparatus, and more particularly to, a method for calculating a time including year, month, day, hour, minute, and second in a home TV-game apparatus.

A conventional home TV-game apparatus comprises a CPU, one or more memories, a plurality of I/O (Input/Output) interfaces and a timer.

In the conventional home TV-game apparatus, the timer calculates a difference between a starting time of a game and a current time, or between any time during playing a game and a current time. The difference of the time of the game is an elapsed time during playing the game, namely, the elapsed time is shown at hour, minute and second.

In the conventional home TV-game apparatus, however, there are disadvantages in that a virtual reality type game using a virtual real time, for example a roll-playing game, is hard to be made, because the timer can not calculate the virtual real time including year, month, day, hour, minute, and second. In addition, a development of the virtual reality type game is very expensive, because the virtual real time must be controlled by a program of the virtual reality type game.

It is an object of the present invention to provide a method for calculating a time in which a tine including year, month, day, hour, minute and second are calculated in a home TV-game apparatus.

According to the present invention there is provided a method of calculating a time in a home TV-game apparatus, comprising steps of:

determining a first time in a number of units;
determining a second time in a number of units; and
comparing the respective units of the first time and the second time to calculate a time difference between the first and second times.

Also according to the present invention there is provided a TV-game time management apparatus for determining the time of a game comprising:

a real time clock;
a memory;
a battery; and
means for determining a first time in a number of units, determining a second time in a number of units, and comparing the respective units of the first time and the second time to calculate a time difference between the first and second times.

The invention will now be described in further detail with reference to the accompanying drawings in which:

FIG. 1 is a block diagram of a game unit and a ROM cartridge of a preferred embodiment according to the present invention;
FIG. 2 is a data structure diagram in a time of the present invention;
FIG. 3 is a flow chart of a time-calculating process of the present invention;
FIG. 4 is a flow chart of a special day process subroutine in FIG. 3;
FIG. 5 is a monthly base table diagram of the present invention;
FIGS. 6A and 6B are timing charts of special day process subroutines in FIG. 3; and
FIG. 7 is a flow chart of a conversion process for converting a total time into a unit requested.

Before explaining a method for calculating a time in a home TV-game apparatus in the preferred embodiment according to the invention, the above mentioned method for calculating a time in a conventional home TV-game apparatus will be explained.

The conventional home TV-game apparatus comprises a CPU, one or more memories, I/O (Input/Output) interfaces, and a timer, as described before.

In the above conventional home TV-game apparatus, the timer calculates a difference between a current time and a starting time of a game or any time during playing a game. For instance, a limiting time between a previous action and a next action is set by a program of the game. During playing the game, an elapsed time from the previous action to the next action is calculated by the timer.

The elapsed time is shown at the unit of second. Further, if necessary, the elapsed time may be shown at the unit hour, minute and second. A conversion of the second unit into the hour, minute and second units is very easy, because the conversion is calculated by using only the sexagesimal notation.

In some cases, a player must take the next action in an elapsed time shown by the timer which is the limiting time. For example, in a chess game, a player must take a next action in an elapsed time set between one action and a following action which is a predetermined limiting time. After each action is finished, the elapsed time in the timer is cleared.

On the other hand, when a virtual reality type game is played, a virtual real time which is shown at year, month, day, hour, minute, and second (YY.MM.DD.hh. mm. and ss) units is a very important element, because the virtual reality type game is proceeded with the virtual real time. Further, while the virtual reality type game is played or when the virtual reality type game is started again from the suspended point of that, it is necessary to calculate the virtual real time to be shown at the YY. MM.DD.hh.mm. and ss units in the virtual reality type game.

In a general computer field, for example, a PC (Personal Computer) can calculate the virtual real time shown at the YY.MM.DD.hh.mm. and ss units. However, the calculating logic is very complicated, so that the calculating logic needs a large amount of capacity for memories and a high speed CPU.

In the conventional home TV-game apparatus, however, the timer dose not calculate a the virtual real time of a game, because the conventional home TV-game apparatus dose not have a sufficient capacity of memories and the CPU performance required for the very complicated calculating logic. In the conventional home TV-game apparatus, therefore, the virtual real time may be applied to a virtual reality type game by a program of the virtual reality type game. In this case, the virtual reality type game is hard to be made and a development cost of the virtual reality type game is very expensive, because a variety of program logics are necessary to be supplied for all situations in the virtual reality type game. Further, if a memory size of a home TV-game apparatus is smaller than a size of a game program with the variety of program logics, the game may not be made or not be played.

Therefore, in a home TV-game apparatus, a method for calculating the virtual real time to be shown at the YY.MM.DD.hh.mm. and ss units is necessary.

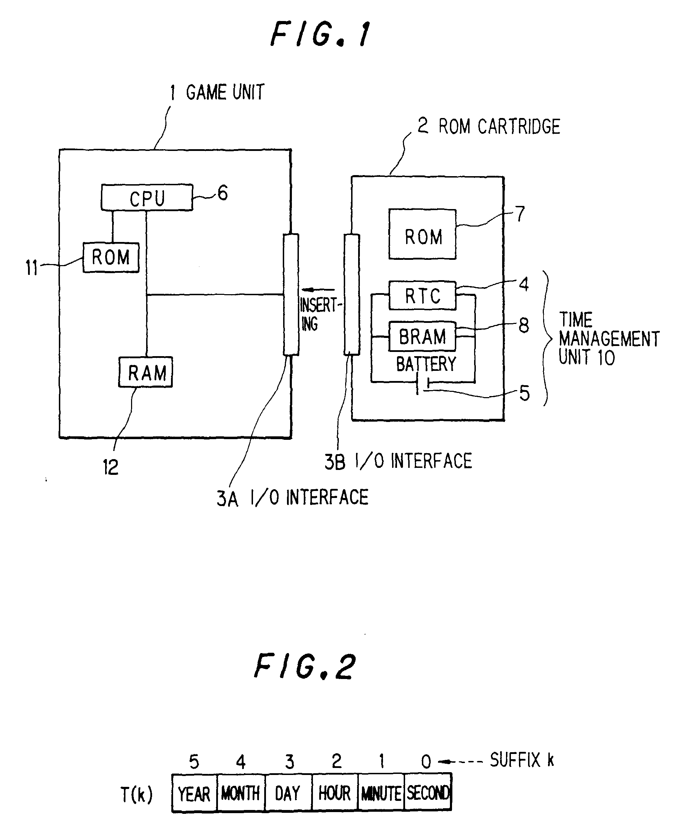

Next, a method for calculating a time in a home TV-game apparatus in the first preferred embodiment according to the invention will be explained in FIGs. 1 to 7.

FIG. 1 is a block diagram of a game unit and a ROM cartridge of the present invention. In FIG. 1, the home TV-game apparatus comprises a game unit 1 and a ROM cartridge 2. The game unit 1 has a CPU 6, a ROM (Read Only Memory) 11, a RAM (Random Access Memory) 12 and an I/O interface 3A. The ROM cartridge 2 has a ROM 7, an I/O interface 3B, and a time management unit 10.

In the game unit 1, the CPU 6, the ROM 11, and the RAM 12 are connected with each other. The CPU 6 is for performing programs to supply instructions to others. The ROM 11 is for storing programs and instructions of an operating system of the home TV-game apparatus. The RAM 12 is for storing a part or all of a game program transferred from the ROM cartridge.

The time management unit 10 has a BRAM (Backup Random Access Memory) 8, a battery 5, and a RTC (Real Time Clock) 4. The RTC 4, the BRAM 8, and the battery 5 are connected with each other.

In the time management unit 10, the RTC 4 is an IC (Integrated Circuit) having a clock function and a calendar function. A time of a game is corresponded with a real time by the clock function and the calendar function in the RTC 4. Namely, the RTC 4 saves year, month, day, day of the week, hour, minute, and second of the real time therein at the time of the game by using the clock function and the calendar function. The battery 5 in the time management unit 10, which is connected with the RTC 4, supplies the RTC 4 with a power. Therefore, if the ROM cartridge 2 is detached from the game unit 1, the RTC 4 correctly saves the time of the game therein independent of the game unit 1.

Further, in the time management unit 10, the BRAM 8 stores the suspended state of the game therein. The battery 5 in the time management unit 10, which is connected with the BRAM 8, supplies the BRAM 8 with a power. Therefore, if the ROM cartridge 2 is detached from the game unit 1, the BRAM 8 correctly stores the suspended state of the game therein independent of the game unit 1.

Further, one I/O interface 3A is in connection with anther I/O interface 3B according to inserting a ROM cartridge 2 into the game unit 1. A game program, for example, a virtual reality type game program, is stored in the ROM 7. The CPU 6 accesses the ROM 7 and the time management unit 10 including the RTC 4 and the BRAM 8. Then, the CPU 6 loads the game program from the ROM 7 and the contents in the RTC 4 and the BRAM 8 therefrom. The game program and the contents are supplied to the RAM 12 in the game unit 1 through the connected I/O interfaces 3A and 3B. Then, the CPU 6 processes the game program according to the contents from the RTC 4 and the BRAM 8.

FIG. 2 is a data structure diagram of a time of the present invention. A time of the game is shown by using the data structure T(k). Each unit of the time (YY.MM.DD.hh.mm. and ss) is indicated by the suffix "k" of the data structure T(k). Namely, T(0) indicates " SECOND (ss) unit", T(1) does "MINUTE (mm) unit", T(2) dose "HOUR (hh) unit", T(3) dose "DAY (DD) unit", T(4) dose "MONTH (MM) unit", and T(5) dose "YEAR (YY) unit".

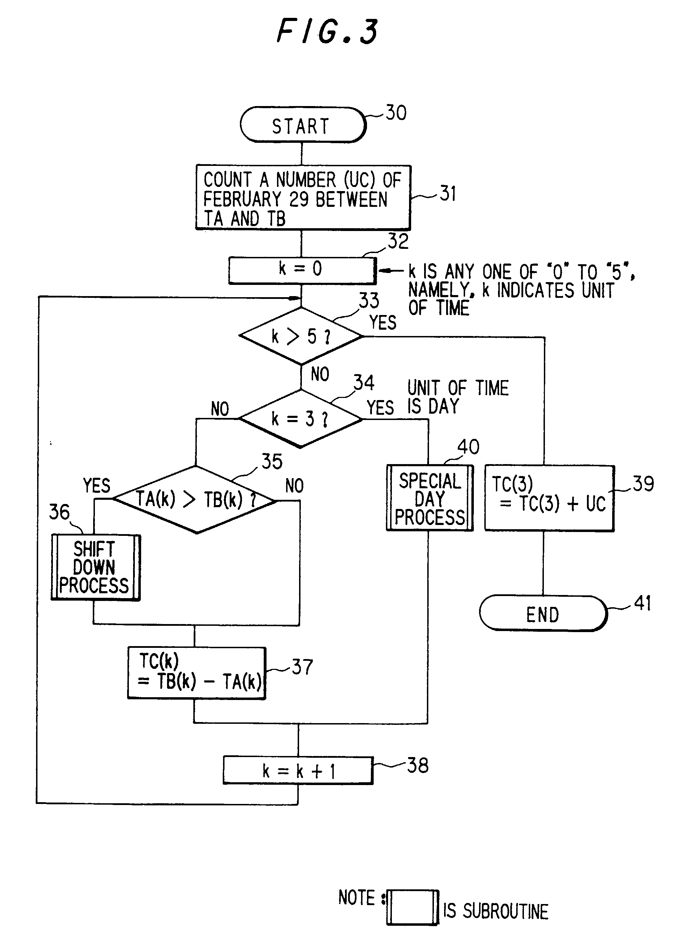

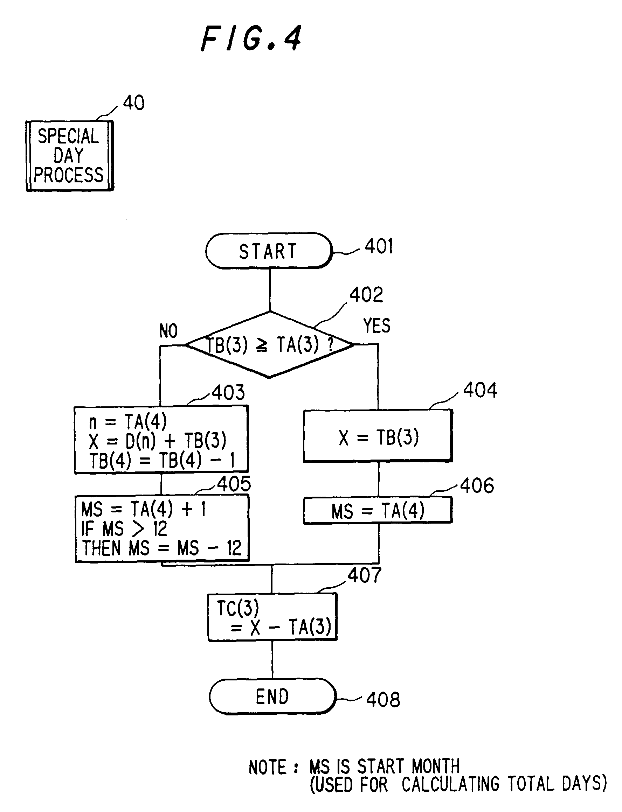

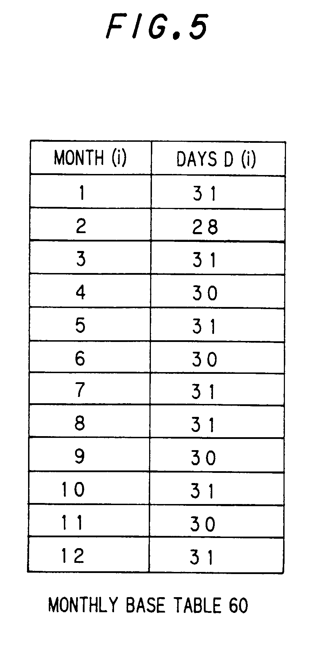

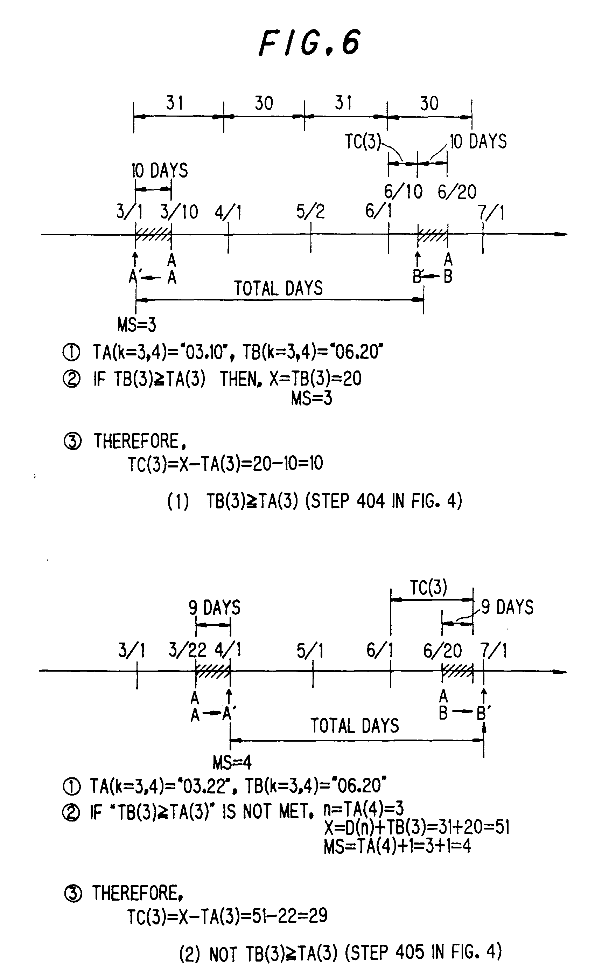

Next, FIG 3 is a flow chart of a time-calculating process of the present invention. FIG. 4 is a flow chart of a special day process subroutine in FIG. 3. FIG. 5 is a monthly base table diagram of the present invention. During playing a game, a time of one situation is "TA", and a time after the situation is " TB". Further, "TC" is a difference between TA and TB (namely, "TC = TB - TA"). TC results from the flow charts of FIGs. 3 and 4, and the monthly base table of FIG. 5.

In this preferred embodiment, TA is "1995(year) .12 (month).10(day).05(hour).10(minute).30(second) and TB is "1996.01.03.03.01.40. In FIG. 3 , t h e time calculating process is started at the step 30. At the step 31, a number (UC) of February 29 is counted between TA and TB, then the UC results "0". Each suffix "k" of the TA(k) and the TB(k), which indicates the time unit, is set for "0" at the step 32. Now the "k" is "0" at the step 33, then the step 34 follows. At the step 34, the "k" is not "3" (k = 0), then the step 35 follows. At the step 35, TA(0) is less than TB(0) (TA(0) = 30 < TB(0) = 40), then step 37 follows. At the step 37, TC(0) results "10" ("TC(0) = TB(0) - TA(0) = 40 - 30 = 10"). Then the "k" is added "1" ("k = k + 1 = 0 + 1 = 1") at the step 38, return to the step 33.

Next, now the "k" is "1", then the step 35 follows. At the step 35, TA(1) is greater than TB(1) (TA(1) = 10 > TB(1) = 01), then the step 36 which is a shift down process follows. At the step 36, TB(1) is added "60" (which is 1 hour) from TB(2). Namely, TB(1) is "61" (01 + 60) and TB(2) is "02" (03 - 01). At the step 37, TC(1) results "51" ("TC(1) = TB(1) - TA(1) = 61 - 10 = 51"). Then the "k" is added "1" ("k = k + 1 = 1 + 1 = 2") at the step 38, return to the step 33.

Next, now the "k" is "2", then the step 35 follows. At the step 35, TA(2) is greater than TB(2) (TA(2) = 05 > TB(2) = 02 (not "03")), then the step 36 follows. At the step 36, TB(2) is added "24" (which is 1 day) from TB(3). Namely, TB(2) is "26" (02 + 24) and TB(3) is " 02" (03 - 01). At the step 37, TC(2) results "21" (" TC(2) = TB(2) - TA(2) = 26 - 05 = 21"). Then the "k" is added "1" ("k = k + 1 = 3") at the step 38, return to the step 33.

Next, now the "k" is "3", then the "YES" pass is selected at the step 34. The step 40 follows. The step 40 is a special day process shown in FIG. 4.

FIG. 4 is a flow chart of the special day process. The step 401 is a start step. At the step 402, TA(3) is greater than TB(3) (TA(3) = 10 > TB(3) = 02 (not "03")), then the step 403 follows through the "NO" pass. The step 403 is a shift down process as follows (D(n) is obtained from the monthly based table 60 in FIG. 5):

$$n = TA(4) = 12$$

$$X = D(n) + TB(3) = D(12) + TB(3) = 31 + 02 = 33$$

$$TB(4) = TB(4) - 01 = 01 - 01 = 00.$$

Next, at the step 405, as follows:

$$MS = TA(4) + 01$$

$$if\ MS > 12\ then\ MS = MS - 12.$$

MS is a start month used for calculating total days. At the first, MS results "13" (MS = TA(4) + 01 = 12 + 01 = 13). Next, MS is greater than 12, then MS results "01" (MS = 13 - 12 = 01).

If TB(3) is equal or greater than TA(3), the step 404 follows through the "YES" pass. At the step 404, X is set for TB(3) (X = TB(3)), then at the step 406, MS is set for TA(4) (MS = TA(4)).

Next the step 407 follows. The step 407 is "TC(3) = X - TA(3)", namely, TC(3) results "23" (TC(3) = 33 - 10 = 23), then the end step 408 follows. Return to the step 40 in FIG. 3, then the step 38 in FIG. 3 follows.

In FIG. 3, the "k" is added "1" ("k = k + 1 = 3 + 1 = 4") at the step 38, return to the step 33. Now the " k" is "4", then the step 35 follows. At the step 35, TA(4) is greater than TB(4) (TA(4) = 12 > TB(4) = 00 (not "01")), then the step 36 follows. At the step 36, TB(4) is added "12" (which is 1 year) from TB(5). Namely, TB(4) is "12" (12 + 00) and TB(5) is "1995" (1996 - 1). At the step 37, TC(4) results "00" ("TC(4) = TB(4) - TA(4) = 12 - 12 = 00"). Then the "k" is added "1" ("k = k + 1 = 4 + 1 = 5") at the step 38, return to the step 33.

Now the "k" is "5", then the step 35 follows. At the step 35, TA(5) is equal to TB(5) (TA(5) = TB(5) = 1995), then the step 37 follows. At the step 37, TC(5) results "0000" ("TC(5) = TB(5) - TA(5) = 1995 - 1995 = 0000"). Then the "k" is added "1" ("k = k + 1 = 5 + 1 = 6") at the step 38, return to the step 33.

At the step 33, the "k" is greater than "5", then the step 39 follows. At the step 39, TC(3) is added the "UC" as a correction value of an intercalary year. Now the "UC" is "0" then TC(3) results "23" (TC(3) = TC(3) + UC = 23 + 0 = 23). The step 41 is an end step.

Therefore, TC (TC = TB - TA) results "0000.00.23.21. 51.10" ("0000(year).00(month).23 (day).21(hour) .51(minute).10(second)").

FIG. 6 is a timing chart of a special day process subroutine in FIG. 3. In (1) case (different case from the above case), TA(k=3,4) is "03(month).10(day)" and TB (k=3,4) is "06(month).20(day)", namely only month and day units of TA and TB are effective values. In this case, the steps 402, 404, 406, and 407 in FIG. 4 are processed. Therefore, MS results "03", further TC(3) results "10" (see FIG. 6 (1)). TA(k=3,4) is replaced " MS.01" (03.01), further TB(k=3,4) is replaced "TB(4) .TC(3)" (06.10). In this logic, a calculated base point is moved from A and B to A' and B' respectively.

In (2) case of FIG. 6, TA(k=3,4) is "03(month) .22 (day)" and TB(k=3,4) is "06(month).20(day)". In this case, the steps 402, 403, 405, and 407 in FIG. 4 are processed. Therefore, MS results "04", further TC(3) results "29" (see FIG. 6 (2)). TA(k=3,4) is replaced " MS. 01" (04.01), further TB(k=3,4) is replaced "TB(4) .TC(3) " (06.29). In this logic, a calculated base point is moved from A and B to A' and B' respectively.

According to the above logic, it is very easy to calculate the total days of difference between TA and TB by using the replaced TA and TB.

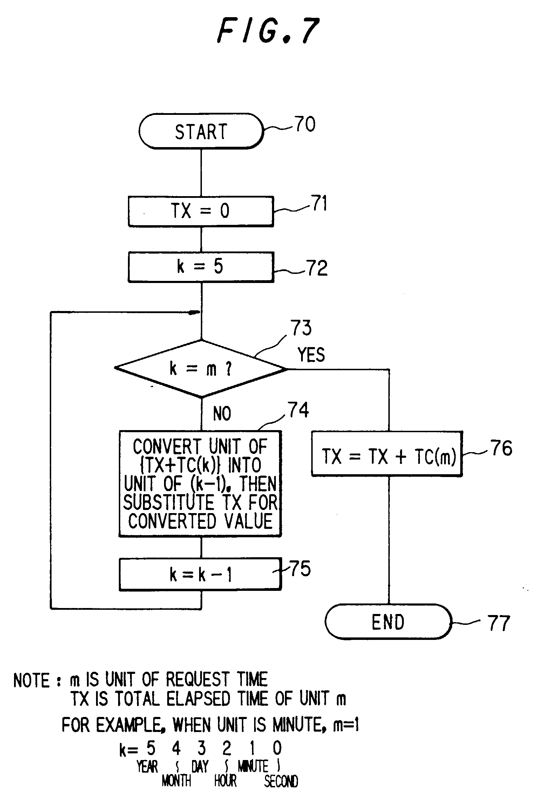

Next, FIG. 7 is a flow chart of a conversion process for converting a total time into a requested unit. According to FIGs 3 to 5, TC has resulted " 0000.00.23.21.51.10". For example, when the obtained TC is converted into an hour unit (namely, m = 2), the conversion process shown in FIG. 7 is used. The step 70 is a start step. At the step 71, TX is set for "0". At the step 72, the suffix "k" is set for "5". Now the suffix "k" is "5", then the "NO" pass is selected at the step 73, because "m = 2". At the step 74, TX results "0", because "TX = TC(5) × 12 = 0000 × 12 = 0". Then "k = k - 1 = 5 - 1 = 4" at the step 75, return to the step 73.

Now the suffix "k" is "4", then the "NO" pass is selected at the step 73. At the step 74, TX results "0", because " {TX + TC(4)} = 0". Then "k = k - 1 = 4 - 1 =3" at the step 75, return to the step 73.

Now the suffix "k" is "3", then the "NO" pass is selected at the step 73. At the step 74, TX results " 552", because "TX = (TX + TC(3)) × 24 = (0 + 23) × 24 = 552". Then "k = k - 1 = 3 - 1 = 2" at the step 75, return to the step 73.

Now the suffix "k" is "2", then the "YES" pass is selected at the step 73, because "k = m = 2". At the step 76, TX results "573", because "TX = TX + TC(m=2) = 552 + 21 = 573". Therefore, the requested value is "573 hours".

In another preferred embodiment according to the invention, in FIG 1, the time management unit 10 may be existed in the game unit 1. Further, the BRAM 8 may be replaced with a non-volatile matter such as an EEPROM (Electrically Erasable Programmable Read Only Memory) or a flash memory.

As this invention may be embodied in several forms without departing from the sprit of essential characteristics thereof, the present embodiment is therefore illustrative and not restrictive, since the scope of the invention is defined by the appended claims rather than by the description proceeding them, and all changes that fall within meets and bounds of the claims, or equivalence of such meets and bounds are therefore intended to embraced by the claims.

**Claims**

1. A method of calculating a time in a home TV-game apparatus, comprising steps of:

   determining a first time in a number of units;
   determining a second time in a number of units; and
   comparing the respective units of the first time and the second time to calculate a time difference between the first and second times.

2. A method according to claim 1, wherein the times include units of date.

3. A method according to claim 1 or claim 2, wherein the calculated time difference is converted to a single unit of time.

4. A method according any of claims 1 to 3, wherein the step of calculating the difference comprises, in turn, comparing the differences between increasingly larger units of date or time.

5. A method according to any of the preceeding claims, wherein the units are year, month, day, hour, minute and second.

6. A TV-game time management apparatus for determining the time of a game comprising:

   a real time clock;
   a memory;
   a battery; and
   means for determining a first time in a number of units, determining a second time in a number of units, and comparing the respective units of the first time and the second time to calculate a time difference between the first and second times.

7. An TV-game time management apparatus according to claim 6, which is disposed in a removable ROM game cartridge.

# FIG.1

# FIG.2

# FIG.3

START — 30

COUNT A NUMBER (UC) OF
FEBRUARY 29 BETWEEN
TA AND TB — 31

k = 0 — 32 ← k IS ANY ONE OF "0" TO "5",
NAMELY, k INDICATES UNIT
OF TIME

33 k > 5 ? — YES

NO

34 k = 3 ? — YES UNIT OF TIME
IS DAY

NO

35 TA(k) > TB(k) ?

YES NO

36 SHIFT
DOWN
PROCESS

40 SPECIAL
DAY
PROCESS

39 TC(3)
= TC(3) + UC

END — 41

TC(k)
= TB(k) − TA(k) — 37

k = k + 1 — 38

NOTE : ☐ IS SUBROUTINE

7

# FIG.4

40

```
SPECIAL
DAY
PROCESS
```

START —— 401

402

NO    TB(3) ≥ TA(3) ?    YES

403

```
n = TA(4)
X = D(n) + TB(3)
TB(4) = TB(4) − 1
```

404

```
X = TB(3)
```

405

```
MS = TA(4) + 1
IF MS > 12
THEN MS = MS − 12
```

406

```
MS = TA(4)
```

407

```
TC(3)
 = X − TA(3)
```

END —— 408

NOTE : MS IS START MONTH
(USED FOR CALCULATING TOTAL DAYS)

# FIG.5

| MONTH (i) | DAYS D (i) |
|-----------|------------|
| 1 | 3 1 |
| 2 | 2 8 |
| 3 | 3 1 |
| 4 | 3 0 |
| 5 | 3 1 |
| 6 | 3 0 |
| 7 | 3 1 |
| 8 | 3 1 |
| 9 | 3 0 |
| 1 0 | 3 1 |
| 1 1 | 3 0 |
| 1 2 | 3 1 |

MONTHLY BASE TABLE 60

# *FIG.6*

31  30  31  30

TC(3)  10 DAYS

10 DAYS

6/10  6/20

3/1  3/10  4/1  5/2  6/1  7/1

A' ← A    A

A' ← A    B ← B

TOTAL DAYS

MS=3

① TA(k=3,4)="03.10", TB(k=3,4)="06.20"

② IF TB(3)≧TA(3)  THEN, X=TB(3)=20
                            MS=3

③ THEREFORE,
        TC(3)=X−TA(3)=20−10=10

(1)  TB(3)≧TA(3) (STEP 404 IN FIG. 4)

TC(3)

9 DAYS  9 DAYS

3/1  3/22  4/1  5/1  6/1  6/20  7/1

A
A ← A'

A
B ← B'

TOTAL DAYS

MS=4

① TA(k=3,4)="03.22", TB(k=3,4)="06.20"

② IF "TB(3)≧TA(3)" IS NOT MET. n=TA(4)=3
                            X=D(n)+TB(3)=31+20=51
                            MS=TA(4)+1=3+1=4

③ THEREFORE,
        TC(3)=X−TA(3)=51−22=29

(2) NOT TB(3)≧TA(3) (STEP 405 IN FIG. 4)

# FIG.7

```
        ┌──────────────┐
        │    START     │── 70
        └──────┬───────┘
               │
        ┌──────┴───────┐
        │    TX = 0    │── 71
        └──────┬───────┘
               │
        ┌──────┴───────┐
        │    k = 5     │── 72
        └──────┬───────┘
               │
               ↓
            ╱────────╲                    73
           ╱          ╲      YES
          ╱  k = m ?   ╲─────────────────┐
           ╲          ╱                   │
            ╲────────╱                    │
               │ NO                       │
               │         74               │
        ┌──────┴───────┐         ┌────────┴────────┐
        │ CONVERT UNIT │         │ TX = TX + TC(m) │── 76
        │ OF           │         └────────┬────────┘
        │ {TX+TC(k)}   │                  │
        │ INTO UNIT OF │                  │
        │ (k-1), THEN  │                  │
        │ SUBSTITUTE TX│                  │
        │ FOR CONVERTED│                  │
        │ VALUE        │                  │
        └──────┬───────┘                  │
               │                          │
        ┌──────┴───────┐                  │
        │   k = k - 1  │── 75             │
        └──────┬───────┘                  │
               │                   ┌──────┴───────┐
               └──────────────→    │     END      │── 77
                                   └──────────────┘
```

NOTE : m IS UNIT OF REQUEST TIME
TX IS TOTAL ELAPSED TIME OF UNIT m

FOR EXAMPLE, WHEN UNIT IS MINUTE, m=1

k= 5 4 3 2 1 0
YEAR ⌠ DAY ⌠ MINUTE ⌠
  MONTH  HOUR  SECOND